# EUROPEAN PATENT APPLICATION

(11) **EP 3 128 288 A1**
(43) Date of publication of application: **08.02.2017**
(21) Application number: 16181173.2
(22) Date of filing: 26.07.2016
(51) Int. Cl.: G01B 7/16, G01L 1/22

(54) **STRAIN GAUGE**

(30) Priority: 05.08.2015 US 201514818775
(71) Applicant: General Electric Company, Schenectady, NY 12345 (US)
(72) Inventor: SYCK, David Howard, Chamblee, GA 30341 (US)
(74) Representative: Lee, Brenda

(57) **Abstract**

Described herein is a strain gauge (20) and a method of making the strain gauge (10, 20). The strain gauge (20) includes a single conductive filament (24) having a first end (26), a second end (28) and a measuring length between the first end (26) and the second end (28). The measuring length is arranged in a planar serpentine pattern. The measuring length has a first cross-sectional area. The first end (26) and second end (28) each have a cross-sectional area greater than the first cross-sectional area.

## Description

### BACKGROUND OF THE INVENTION

The present invention relates to strain gauges, particularly to strain gauges subjected to high stress environments.

A strain gauge typically includes a conductor, such as a thin foil or wire, arranged in a serpentine pattern. The pattern is such that the conductor extends along a length and doubles back on itself. This is repeated to form a plurality of parallel lengths.

The conductor is positioned upon a component to be tested. The strain gauge is attached to the component with a non-conductive adhesive that insulates the strain gauge from the component if the component is conductive. In embodiments, the strain gauge can include a non-conductive backing layer that is attached to the component to be tested. The backing layer isolates the conductive component from conductive filament of the strain gauge. The backing layer is optional. In embodiments, the strain gauge can be attached to a component by applying an insulating adhesive to the component surface and then attaching the strain gauge. The strain gauge is typically affixed to the test component using an adhesive or other means of fixation; however, such backing is optional.

The resistance of the conductor is measured in order to determine the strain of the test component. The resistance of the conductor varies depending on whether it is under compression or tension. When in compression, the length of the conductor decreases and its thickness increases, thus decreasing the resistance measured. Conversely, when in tension, the length of the conductor increases and its thickness decreases, which increases the resistance measured.

The change in length and thickness undergone during strain is experienced along each of the lengths of the conductor. Consequently, the change in resistance is multiplied by the number of lengths in the serpentine pattern. Therefore, the pattern amplifies the change in resistance measured, thus making the gauge far more sensitive.

Two strain gauges may be used to obtain a full surface 2D strain field. To achieve this, the two strain gauges are arranged perpendicular to each other. To improve the accuracy of this method, a third strain gauge may be included at an angle of 45 degrees to the other two strain gauges. This accounts for any misalignment between the strain gauges.

A strain gauge works as a variable resistor, and is therefore used to form the active arm of a Wheatstone bridge. This arrangement provides a more sensitive and accurate measurement.

Generally, strain gauges are used for measuring strains that are slowly varying across the surface of the test component, and where the surface stresses are reasonably representative of the stresses that would be seen on the inside of the material of the component.

In high temperature, high vibrational, corrosive atmosphere environments, such as gas or steam turbine environments, strain gauges frequently fail. One failure mode is the weld between the filament (or grid wire) and the connecting wires (or lead wires) of the strain gauge.

Strain gauges are used to measure the strain on components, e.g., buckets in turbomachines such as gas and/or steam turbines. Such components are subjected to high degrees of vibration, high temperatures and corrosive atmospheres. Strain gauges attached to such components can fail after exposure to the stressful environment. The types of failure modes vary; however, it would be desirable to reduce the occurrence of failure of the strain gauges under such conditions.

### BRIEF SUMMARY OF THE INVENTION

Embodiments of the invention include a strain gauge including a single conductive filament having a first end, a second end and a measuring length between the first end and the second end. The measuring length is arranged in a planar serpentine pattern. The measuring length has a first cross-sectional area. The first end and second end each have a cross-sectional area greater than the first cross-sectional area.

Embodiments of the present invention include a method of making a strain gauge. The method includes providing a conductive filament. The conductive filament is drawn or swaged so that the conductive filament includes a measuring length having a first cross-sectional area, and a first end and a second end each having a cross-sectional area greater than the first cross-sectional area. The measuring length is formed into a planar grid pattern.

Embodiments of the present invention include a strain gauge having a single conductive filament having a first end, a second end and a measuring length between the first and second end. The conductive filament consists of a material selected from the group consisting of: nickel/chromium alloy, platinum/nickel alloy, platinum, and chromium/aluminum alloy. The measuring length is arranged in a planar serpentine pattern, the measuring length having a first diameter. The first end and second end each have a diameter greater than the first cross-sectional area.

The above described and other features are exemplified by the following detailed description.

### BRIEF DESCRIPTION OF THE DRAWINGS

These and other features of this invention will be more readily understood from the following detailed description of the various aspects of the invention taken in conjunction with the accompanying drawings that depict various embodiments of the invention, in which:
FIG. 1 is a strain gauge of the prior art.
FIG. 2 is a strain gauge in accordance with various embodiments herein.
FIG. 3 shows a wire used to make a strain gauge according to embodiments described herein.

### DETAILED DESCRIPTION

Disclosed herein is a strain gauge that is able to withstand high stress environments, including high temperatures of from 350 °C to 1050 °C.

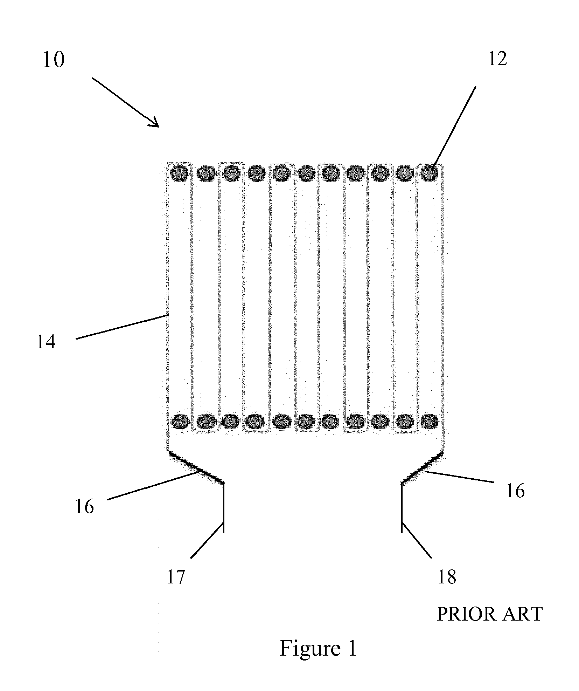

FIG. 1 shows a strain gauge 10 of the prior art. Strain gauge 10 includes a conductive wire 14 or filament which is laid down in a grid pattern. In an embodiment, the grid pattern is formed by guiding conductive wire 14 around posts 12 in a serpentine pattern (grid pattern) and fastening the wire in place with tape (not shown). Conductive wire 14 is welded at 16 to a first connector 17 at one end of the grid pattern. Conductive wire 14 is welded at 16 to a second connector 18 at the other end of the grid pattern. The strain gauge is removed from posts 12 after manufacture as the posts are not part of the strain gauge. Welds 16 may fail in high stress environments, rendering the strain gauge inoperable.

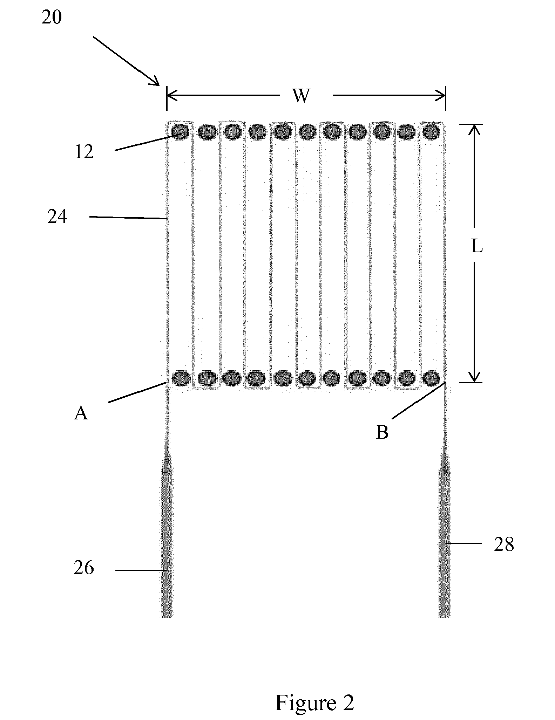

FIG. 2 shows a strain gauge 20 in accordance with various embodiments of the invention. Strain gauge 20 includes a single conductive filament 24 or wire which is laid down in a grid pattern. In an embodiment, the grid pattern is formed by guiding conductive filament 24 or conductive wire around posts 12 in a planar serpentine pattern (grid pattern) and fastening the filament in place with tape (not shown). Conductive filament 24 has a first end 26 and a second end 28. The measuring length of conductive filament 24 begins at point A follows the serpentine pattern around the posts and ends at point B. The serpentine pattern is such that a plurality of parallel lengths of the measuring length are provided. Instead of welding the filament or wire to a connector as shown in the prior art depicted in FIG. 1, strain gauge 20, shown in FIG. 2 is made from a single wire where ends 26 and 28 have a cross-sectional area greater than the cross-sectional area of measuring length (point A to point B of filament 24). In embodiments, the cross-sectional area of filament 24 is round, in which case the diameter of ends 26 and 28 is greater than the diameter of the measuring length. A conductive filament 24 having a measuring length that is smaller in cross-sectional area than at ends 26 and 28 of the conductive filament 24 is provided by drawing or swaging a wire.

In embodiments having a round cross-sectional area, the measuring length of the single conductive filament has a diameter of from about 12.7 microns to about 22.86 microns (0.0005 to about 0.0009 inches). In embodiments, the first end 26 has a diameter of from about 25.4 microns to about 254 microns (0.001 to about 0.01 inches). In embodiments, the second end 28 has a diameter of from about 25.4 microns to about 254 microns (0.001 to about 0.01 inches). The conductive filament 24 can be pressed or rolled under pressure to change the cross-section from a circle to a more flattened shape.

The grid pattern or measuring area of the strain gauge is determined by the width W and length L, shown in FIG. 2. In embodiments the width W of the grid pattern is from about 2032 microns to about 38100 microns (0.08 inches to about 1.5 inches) and the length L is from about 2032 microns to about 38100 microns (0.08 inches to about 1.5 inches).

In embodiments, the strain gauge can optionally include an insulating film (not shown) attached to the grid pattern or a high temperature (350 °C to 1050 °C) tape can be placed over the measuring area. The component being measured can be prepared by applying an adhesive that is non-conducting to a surface of the component and then attaching the strain gauge to the adhesive.

In high temperature environments, the filament can be resistant to oxidation, corrosion, softening or any other process which would promote breakage. The conductive filament for high temperature environments can be a material of an alloy or metal such as nickel/chromium alloy, platinum/nickel alloy, platinum, and chromium/aluminum alloy. Nickel chromium alloys are sold under the tradenames NICHROME®, CHROMEL® and MOLECULOY®. Chromium/aluminum alloys are sold under tradename HOSKINS® available from Hyndaman Industrial Produsts Inc.

In order to manufacture the strain gauge described herein a filament or wire is prepared by shrinking a portion of the filament through swaging, drawing or a similar method, so that its volume remains the same, and the diameter decreases as the length increases. The decreased diameter section of the filament is the measuring length. Each end of the wire is not subjected to the drawing process.

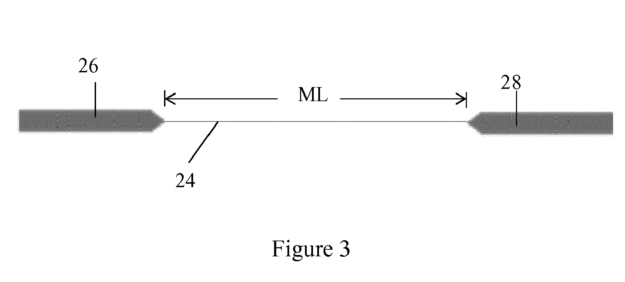

The wire drawing or swaging process produces a wire 24 having ends of a greater diameter than the middle portion and is shown in FIG. 3. The portion of conductive filament 24 that is subjected to the drawing process is the measuring length ML. Ends 26 and 28 remain at the original diameter or cross-sectional area. Ends 26 and 28 can be plated with the conductive alloys and metals such as nickel/chromium alloy, platinum/nickel alloy, platinum, and chromium/aluminum alloy, to lower the resistance through an electroplating process or similar method..

After drawing the filament or wire as shown in FIG. 3, ends 26 and 28 of the filament or wire have a greater cross-sectional area. In FIG.3, the ends 26, 28 and measuring length (ML) of the filament 24 are not to scale. The filament is formed into a planar grid pattern by running the wire up and around the post 12 (FIG. 2) and then back to the post at the other end as shown in FIG. 2. The process is controlled so that the length of total length of filament 24 matches the length of the grid pattern (measuring length) and allows ends 26 and 28 to extend away from the grid pattern. The grid pattern is the taped to hold it in place and removed from the posts. Further steps such as adding an insulating surface or plate to hold the strain gauge 20 (FIG. 2) can then be conducted.

While various embodiments are described herein, it will be appreciated from the specification that various combinationsof elements, variations or improvements therein may be made by those skilled in the art, and are within the scope of the invention. In addition, many modifications may be made to adapt a particular situation or material to the teachings of the invention without departing from essential scope thereof. Therefore, it is intended that the invention not be limited to the particular embodiment disclosed as the best mode contemplated for carrying out this invention, but that the invention will include all embodiments falling within the scope of the appended claims.

This written description uses examples to disclose the invention and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

Various aspects and embodiments of the present invention are defined by the following numbered clauses:
1. A strain gauge comprising:
   a single conductive filament having a first end, a second end and a measuring length between the first and second end,
   wherein the measuring length is arranged in a planar serpentine pattern, the measuring length having a first cross-sectional area,
   wherein the first end and second end each have a cross-sectional area greater than the first cross-sectional area.
2. The strain gauge of clause 1, wherein the measuring length has a diameter of from about 12.7 microns to about 22.86 microns.
3. The strain gauge of any preceding clause, wherein the first end has a diameter of from about 25.4 microns to about 254 microns.
4. The strain gauge of any preceding clause, wherein the second end has a diameter of from about 25.4 microns to about 254 microns.
5. The strain gauge of any preceding clause, further comprising an insulating film attached to the planar serpentine pattern.
6. The strain gauge of any preceding clause, further comprising a tape attached to the planar serpentine pattern wherein the tape can withstand a temperature of from 350 °C to 1050 °C.
7. The strain gauge of any preceding clause, wherein the planar serpentine pattern forms a measuring area having a width W of from about 2032 microns to about 38100 microns and a length L of from about 2032 microns to about 38100 microns.
8. The strain gauge of any preceding clause, wherein the single conductive filament consists of a material selected from the group consisting of: nickel/chromium alloy, platinum/nickel alloy, platinum, and chromium/aluminum alloy.
9. A method of making a strain gauge, the method comprising:
   providing a conductive filament;
   drawing or swaging the conductive filament so that the conductive filament includes a measuring length having a first cross-sectional area, a first end and a second end each having a cross-sectional area greater than the first cross-sectional area; and
   forming the measuring length into a planar grid pattern.
10. The method of any preceding clause, further comprising:
   attaching the planar grid pattern to an insulating layer or an insulating tape.
11. The method of any preceding clause, further comprising:
   plating the first end and the second end with a conductive material selected from the group consisting of: nickel/chromium alloy, platinum/nickel alloy, platinum, and chromium/aluminum alloy.
12. The method of any preceding clause, wherein the conductive filament consists of a material selected from the group consisting of: nickel/chromium alloy, platinum/nickel alloy, platinum, and chromium/aluminum alloy.
13. The method of any preceding clause, wherein the measuring length has a diameter of from about 12.7 microns to about 22.86 microns
14. A strain gauge comprising:
   a single conductive filament having a first end, a second end and a measuring length between the first and second end, wherein the conductive filament consists of a material selected from the group consisting of: nickel/chromium alloy, platinum/nickel alloy, platinum, and chromium/aluminum alloy,
   wherein the measuring length is arranged in a planar serpentine pattern, the measuring length having a first diameter,
   wherein the first end and second end each have a diameter greater than the first diameter.
15. The strain gauge of any preceding clause, wherein the diameter of the first end is from about 25.4 microns to about 254 microns.
16. The strain gauge of any preceding clause, wherein the diameter the second end is of from about 25.4 microns to about 254 microns.
17. The strain gauge of any preceding clause, wherein the planar serpentine pattern forms a measuring area having a width W of from about 2032 microns to about 38100 microns and a length L of from about 2032 microns to about 38100 microns.
18. The strain gauge of any preceding clause, further comprising a tape attached to the planar serpentine pattern wherein the tape can withstand a temperature of from 350 °C to 1050 °C attached to the planar serpentine pattern.
19. The strain gauge of any preceding clause, further comprising an electroplated coating on the first end and the second end.
20. The strain gauge of any preceding clause, wherein the electroplated coating is selected from the group consisting of: nickel/chromium alloy, platinum/nickel alloy, platinum, and chromium/aluminum alloy.

## Claims

1. A strain gauge (20) comprising:
a single conductive filament (24) having a first end (26), a second end (28) and a measuring length between the first (26) and second end (28),
wherein the measuring length is arranged in a planar serpentine pattern, the measuring length having a first cross-sectional area,
wherein the first end (26) and second end (28) each have a cross-sectional area greater than the first cross-sectional area.

2. The strain gauge (20) of claim 1, wherein the measuring length has a diameter of from about 12.7 microns to about 22.86 microns.

3. The strain gauge (20) of claim 1 or 2, wherein the first end (26) and second end (28) has a diameter of from about 25.4 microns to about 254 microns.

4. The strain gauge (20) of claim 1, 2 or 3, further comprising a tape attached to the planar serpentine pattern wherein the tape can withstand a temperature of from 350 °C to 1050 °C.

5. The strain gauge (20) of any of claims 1 to 4, wherein the single conductive filament (24) consists of a material selected from the group consisting of: nickel/chromium alloy, platinum/nickel alloy, platinum, and chromium/aluminum alloy.

6. A method of making a strain gauge (20), the method comprising:
providing a conductive filament (24);
drawing or swaging the conductive filament (24) so that the conductive filament (24) includes a measuring length having a first cross-sectional area, a first end (26) and a second end (28) each having a cross-sectional area greater than the first cross-sectional area; and
forming the measuring length into a planar grid pattern.

7. The method of claim 6, further comprising:
plating the first end (26) and the second end (28) with a conductive material selected from the group consisting of: nickel/chromium alloy, platinum/nickel alloy, platinum, and chromium/aluminum alloy.

8. A strain gauge (20) comprising:
a single conductive filament (24) having a first end (26), a second end (28) and a measuring length between the first and second end (28), wherein the conductive filament (24) consists of a material selected from the group consisting of: nickel/chromium alloy, platinum/nickel alloy, platinum, and chromium/aluminum alloy,
wherein the measuring length is arranged in a planar serpentine pattern, the measuring length having a first diameter,
wherein the first end (26) and second end (28) each have a diameter greater than the first diameter.

9. The strain gauge (20) of claim 8, wherein the diameter of the first end (26) and the second end (28) is from about 25.4 microns to about 254 microns.

10. The strain gauge (20) of claim 8 or 9, wherein the electroplated coating is selected from the group consisting of: nickel/chromium alloy, platinum/nickel alloy, platinum, and chromium/aluminum alloy.
